# EUROPÄISCHE PATENTANMELDUNG

(11) **EP 3 327 874 A1**
(43) Veröffentlichungstag der Anmeldung: **30.05.2018**
(21) Anmeldenummer: 17202744.3
(22) Anmeldetag: 21.11.2017
(51) Int. Cl.: H01R 13/58, H02G 3/06

(54) **STECKVERBINDERANORDNUNG MIT EINEM STECKVERBINDER, EINEM KABEL UND EINEM DAS KABEL UMGEBENDEN WELLROHR**

(30) Priorität: 28.11.2016 DE 102016122858
(71) Anmelder: Hirschmann Automotive GmbH, 6830 Rankweil-Brederis (AT)
(72) Erfinder: LINSEDER, Manuel, 6830 Rankweil (AT); Ellensohn, Kurt, 6840 Götzis (AT); Perle, Marcel, 6822 Satteins (AT)
(74) Vertreter: Greif, Thomas

(57) **Zusammenfassung**

Steckverbinderanordnung, aufweisend einen Steckverbinder mit einem Gehäuse (1), ein Kabel (2), ein das Kabel (2) umgebendes Wellrohr (3) sowie zumindest einen Kontaktpartner, wobei der zumindest eine Kontaktpartner an einem Ende eines elektrischen Leiters des Kabels (2) und innerhalb des Gehäuses (1) des Steckverbinders angeordnet ist, wobei weiterhin ein Ende des Wellrohres (3) mit dem Gehäuse (1) des Steckverbinders verbunden ist, dadurch gekennzeichnet, dass das Ende des Gehäuses (1) des Steckverbinders eine Verzahnung (4) aufweist, wobei die Verzahnung (4) im innenbereich des Wellrohres (4) in zumindest eine von dem Wellrohr gebildete Nut eingreift.

## Beschreibung

Die Erfindung betrifft eine Steckverbinderanordnung, aufweisend einen Steckverbinder mit einem Gehäuse, ein Kabel, ein das Kabel umgebendes Wellrohr sowie zumindest einen Kontaktpartner, wobei der zumindest eine Kontaktpartner an einem Ende eines elektrischen Leiters des Kabels und innerhalb des Gehäuses des Steckverbinders angeordnet ist, wobei weiterhin ein Ende des Wellrohres mit dem Gehäuse des Steckverbinders verbunden ist, gemäß den Merkmalen des Oberbegriffes des Patentanspruches 1.

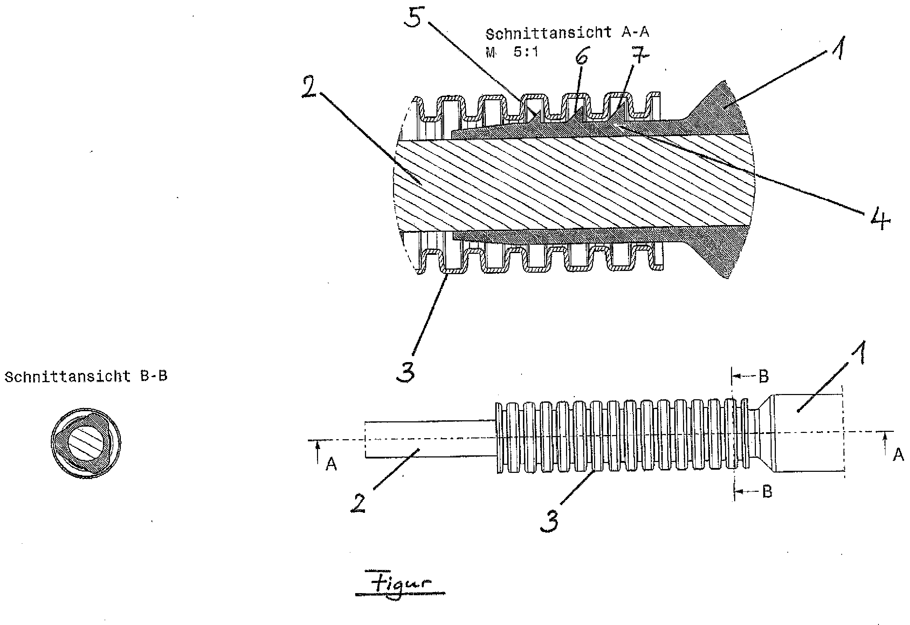

Eine solche Steckverbinderanordnung ist aus der DE 10 2006 049 703 A1 bekannt. Dieser bekannte Steckverbinder mit mindestens einem in einem Gehäuse des Steckverbinders aufgenommenen Kontaktes und einer aus dem Gehäuse herausgeführten Zuleitung, welche einen an dem Gehäuse festgelegten Schlauch in Form eines Wellrohres aufweist, in dem ein mit dem Kontakt verbundener Leiter geführt ist, weist eine Tülle als separates Bauteil auf, wobei an dem an dem Gehäuse des Steckverbinders festgelegten Ende des Wellrohres die Tülle angeordnet ist, welche in einem Spritzgussverfahren zur Bildung des Gehäuses des Steckverbinders umspritzt ist. Der Figur 1 dieser Offenlegungsschrift ist zu entnehmen, dass das Gehäuse des Steckverbinders, die Tülle und das Wellrohr separate Bauteile bilden, wobei das Ende des Wellrohres mit seiner äußeren Geometrie in die Innengeometrie der Hülle eingreift und die Außengeometrie der Hülle in eine Innengeometrie eines Endbereiches des Gehäuses des Steckverbinders eingesetzt ist.

Diese Ausgestaltung hat den Nachteil, dass die Tülle als separates Teil hergestellt und bei der Montage gehandhabt werden muss, sodass die Gefahr besteht, dass die Tülle vergessen wird oder das Ende des Wellrohres trotz Vorhandensein der Tülle nicht korrekt in den korrespondierenden Endbereich des Gehäuses des Steckverbinders eingesetzt wird.

Der Erfindung liegt daher die Aufgabe zugrunde, eine Steckverbinderanordnung bereitzustellen, mit der die Nachteile, wie sie vorstehend beschrieben worden sind, vermieden werden.

Diese Aufgabe ist durch die Merkmale des Patentanspruches 1 gelöst.

Erfindungsgemäß ist vorgesehen, dass das Ende des Gehäuses des Steckverbinders eine Verzahnung aufweist, wobei die Verzahnung im Innenbereich des Wellrohres in zumindest eine von dem Wellrohr gebildete Nut eingreift. Dadurch wird die Teilezahl verringert, da das Ende des Gehäuses des Steckverbinders die Verzahnung bildet, welche direkt in Kontakt mit der Innengeometrie des Wellrohres gebracht werden kann. Dies kann durch einfaches Aufschieben des Endbereiches des Wellrohres auf die Verzahnung erfolgen, sodass das Wellrohr danach automatisch an dem Gehäuse des Steckverbinders festgelegt ist. Je nach Wahl der Außengeometrie der Verzahnung und/oder der Innengeometrie des Wellrohres kann dadurch eine lockere, gegebenenfalls lösbare Verbindung realisiert werden, wobei es auch denkbar ist, die aufeinander abgestimmte Geometrie so auszuführen, dass das Ende des Wellrohres auf die Verzahnung des Gehäuses des Steckverbinders aufgeschoben und in einer Art Presspassung dort festgelegt wird, um eine gewünschte Dichtwirkung zu erzielen.

Die Anordnung der Verzahnung im Endbereich des Gehäuses des Steckverbinders hat darüber hinaus den Vorteil, dass die Herstellung eines solchen Gehäuses vereinfacht ist und in einem Verfahrensschritt, zum Beispiel in einem Kunststoffspritzgussverfahren, ausgeführt werden kann, wobei die Verzahnung und das Gehäuse einstückig ausgebildet sind.

In Weiterbildung der Erfindung ist vorgesehen, dass die Verzahnung mehrere in Längsrichtung des Kabels betrachtet hintereinander angeordnete um den Endbereich des Gehäuses umlaufende Zähne aufweist. Während es denkbar ist, dass der Endbereich des Gehäuses beispielsweise in etwa zylinderförmige gestaltet ist und nur einen zumindest teilweise, insbesondere vollständig umlaufenden Zahn aufweist, ist es jedoch von Vorteil, wenn der beispielsweise in etwa zylinderförmige gestaltete Endbereich des Gehäuses mehrere hintereinander angeordnete und jeweils zumindest teilweise, insbesondere vollständig umlaufende Zähne aufweist, da dadurch die Haltekräfte für das Wellrohr auf dem Endbereich des Gehäuses des Steckverbinders vergrößert werden. Somit wird ein unbeabsichtigtes Abziehen des Wellrohres von dem Gehäuse wirksam vermieden. Außerdem erhöht sich bei entsprechender Anpassung der einander korrespondierenden Geometrie von Wellrohr und Endbereich des Gehäuses die Dichtwirkung.

In Weiterbildung der Erfindung ist vorgesehen, dass die Höhe der umlaufenden Zähne gleich ist. Dadurch lässt sich der Endbereich des Gehäuses mit seiner Verzahnung besonders einfach herstellen, wobei in besonders vorteilhafter Weise die zumindest teilweise umlaufenden Zähne mit ihrer gleichen Höhe in jeweils eine korrespondierende Nut, die von dem Wellrohr gebildet wird, eingreifen können.

Dadurch werden besonders hohe Zugkräfte, die in Längsrichtung des Kabels einwirken können, aufgefangen. Allerdings erschwert dies das Aufschieben des Endbereiches des Wellrohres auf die Verzahnung.

Zur Erleichterung des Aufschiebens des Endbereiches des Wellrohres auf die Verzahnung ist daher in einer weiteren Ausgestaltung erfindungsgemäß vorgesehen, dass die Höhe der umlaufenden Zähne unterschiedlich ist. So kann beispielsweise ein umlaufender Zahn, der im Endbereich des Gehäuses des Steckverbinders angeordnet ist und der zuerst beim Aufschieben mit dem Endbereich des Wellrohres in Kontakt kommt, einen kleineren Außendurchmesser aufweisen, als der zumindest eine weitere folgende Zahn der Verzahnung. Der durchmesserkleinere erste Zahn ermöglicht damit ein vereinfachtes Aufsetzen und Aufschieben des Endbereiches des Wellrohres, wobei er aufgrund seines kleineren Durchmessers noch nicht die erforderlichen Zugkräfte aufnehmen kann. Dies bewirkt erst der zumindest eine weitere folgende und durchmessergrößere Zahn, der beispielsweise mit seiner Geometrie vollständig in die korrespondierende Nut des Wellrohres nach dem Aufschieben eingreift. Während es denkbar ist, einen durchmesserkleineren und einen durchmessergrößeren Zahn zu verwenden, kann auch daran gedacht werden, im Endbereich einen durchmesserkleineren Zahn und danach folgend mehr als einen durchmessergrößeren Zahn im Bereich der Verzahnung, die sich in Richtung des Steckgesichtes des Steckverbinders erstreckt, vorzusehen.

Um das Aufschieben des Endbereiches des Wellrohres noch weiter zu vereinfachen ist in einer weiteren Ausgestaltung der Erfindung vorgesehen, dass die Höhe der umlaufenden Zähne in Längsrichtung des Kabels betrachtet von dem Endbereich des Gehäuses des Steckverbinders, auf den der Endbereich des Wellrohres aufgesteckt wird, in Richtung des Steckgesichtes des Steckverbinders zunimmt. Im Querschnitt betrachtet befinden sich somit im Bereich der Verzahnung mehrere in gleichen oder in unterschiedlichen Abständen zueinander angeordnete zumindest teilweise umlaufende Zähne, deren Durchmesser vom Endbereich des Gehäuses des Steckverbinders, auf den der Endbereich des Wellrohres aufgesteckt wird, in Richtung des Steckgesichtes des Steckverbinders zunimmt. Die Zunahme kann gleichmäßig in Form einer Rampe gestaltet sein, aber auch gestuft oder bogenförmige ausgeführt sein.

Der verwendete Begriff "Wellrohr" steht stellvertretend für eine starre Gestaltung (dann vorzugsweise als "Wellrohr" bezeichnet), aber auch für eine flexible Gestaltung (dann auch als "Wellschlauch" zu bezeichnen).

Ein Ausführungsbeispiel der Erfindung ist im Folgenden beschrieben und anhand dreier Darstellungen in der Figur erläutert.

Die obere Darstellung der Figur zeigt, soweit im Einzelnen dargestellt, einen Teil eines Gehäuses 1 eines Steckverbinders. Schraffiert dargestellt ist der Endbereich des Gehäuses 1, aus dem ein Kabel 2 herausgeführt ist. Das Kabel 2 weist in an sich bekannter Weise zumindest einen elektrischen Leiter auf, oftmals weist es mehrere elektrische Leiter auf. Jeder elektrische Leiter ist mit einem nicht dargestellten Kontaktpartner elektrisch verbunden, wobei der jeweilige Kontaktpartner in dem Gehäuse 1 angeordnet ist. Bei einer Ausführungsform ist beispielsweise innerhalb des Gehäuses 1 ein in der Figur nicht dargestellter Kontaktträger vorhanden, wobei ein solcher Kontaktträger korrespondierend mit der Anzahl der Kontaktpartner Kontaktkammern aufweist, wobei in jeder Kontaktkammer ein Kontaktpartner eingesetzt ist. Die Kontaktkammer ist in Richtung des Steckgesichtes des Steckverbinders offen, sodass von dort aus ein Kontaktpartner eines Gegensteckverbinders eingeführt werden kann zwecks elektrischer Kontaktierung. In der dem Steckgesicht abgewandten Richtung wird der zumindest eine elektrische Leiter in Form des Kabels 2 aus dem Gehäuse 1 des Steckverbinders herausgeführt.

Um diesen Endbereich des Gehäuses 1 des Steckverbinders und auch das aus diesem Endbereich herausgeführte Kabel 2 vor äußeren Beanspruchungen, zum Beispiel vor Knicken, Zug-und Druckbeanspruchungen und dergleichen, zu schützen, ist ein Wellrohr 3 vorgesehen. Das Wellrohr 3 ist zumindest über eine Teillänge des Kabels 2 aufgeschoben und bildet einen Endbereich, der mit dem Endbereich des Gehäuses 1 in Wirkverbindung gebracht wird, indem der Endbereich des Wellrohres 3 auf den korrespondierenden Endbereich des Gehäuses 1 aufgeschoben wird. Dabei sollte die Innengeometrie des Wellrohres, insbesondere einen runden Querschnitt aufweisend, mit der Außengeometrie des Endbereiches des Gehäuses 1, insbesondere ebenfalls einen runden Querschnitt aufweisend, korrespondieren.

Zur Festlegung des Endbereiches des Wellrohres 3 ist in dem Endbereich des Gehäuses 1 eine Verzahnung 4 vorgesehen, wobei die umlaufenden Zähne der Verzahnung 4 von dem Gehäuse 1 gebildet werden.

In der oberen Darstellung der Figur ist erkennbar, dass drei umlaufende Zähne 5, 6, 7 in Längsrichtung des Kabels 2 betrachtet hintereinander angeordnet sind. Der Abstand der umlaufenden Zähne 5, 6, 7 entspricht dabei dem Abstand der korrespondierenden Nuten im Innenbereich des Wellrohres 3, wobei der Abstand der Nuten des Wellrohres 3 im Regelfall gleich groß ist. Dementsprechend sind auch die Abstände der umlaufenden Zähne 5, 6, 7 gleich groß.

Der oberen Darstellung der Figur kann weiterhin entnommen werden, dass bei diesem Ausführungsbeispiel die Höhe der umlaufenden Zähne 5, 6, 7 in Längsrichtung des Kabels 2 betrachtet zunimmt. Der bei Betrachtung der Figur linke umlaufende Zahn 5 hat den kleinsten Durchmesser, wobei der mittlere umlaufende Zahn 6 einen etwas größeren Durchmesser und der rechte Zahn 7 den größten Durchmesser hat. Dadurch liegt der äußere Bereich der ansteigenden Zähne 5, 6, 7 auf einer geradlinigen Rampe. Der Einstieg kann jedoch auch gestuft oder bogenförmig verlaufen.

Durch den bei der Betrachtung der oberen Darstellung der Figur ganz links vorhandenen Endbereich des Gehäuses 1, der einen Außendurchmesser aufweist, der kleiner ist als der kleinste Innendurchmesser des Wellrohres 3, kann der Endbereich des Wellrohres 3 geführt auf diesen Endbereich des Gehäuses 1 aufgeschoben werden. Durch den dargestellten rampenförmig ausgebildeten Endbereich des Gehäuses 1 wird dieses Aufschieben erleichtert, sodass der Endbereich des Wellrohres 3 auch einfach, schnell und geführt über die umlaufenden Zähne 5, 6, 7 weiter aufgeschoben werden kann. Nicht dargestellt, aber gegebenenfalls vorhanden sein kann ein Anschlag, an den das stirnförmige Ende des Wellrohres zur Anlage kommt, wenn es bestimmungsgemäß auf den Endbereich des Gehäuses 1 des Steckverbinders 4 mit seiner Verzahnung aufgeschoben worden ist.

In der unteren rechten Darstellung der Figur ist eine Draufsicht auf den Endbereich des Gehäuses 1 (ohne dass das vollständige Gehäuse erkennbar ist) dargestellt, wobei das Kabel 2 abschnittsweise von dem Wellrohr 3 bestimmter Länge umgeben ist. Der Schnitt A-A der unteren rechten Darstellung der Figur ist in der oberen Darstellung der Figur gezeigt. Der Schnitt B-B der unteren rechten Darstellung der Figur ist in der linken Schnittansicht der Figur dargestellt. Dort ist als Sonderfall gezeigt, dass der Innenbereich des Wellrohres eine runde Geometrie aufweist, wohingegen zumindest einer der Zähne 5, 6, 7 nicht vollständig umlaufend, sondern nur teilweise umlaufend von dem Endbereich des Gehäuses 1 gebildet ist. Der Umlauf einer der Zähne, mehrerer Zähne oder aller Zähne 5, 6, 7 erfolgt damit abschnittsweise mit wechselnden Durchmessern, wobei ein jeder Abschnitt mit dem größten Durchmesser den dazwischenliegenden Abschnitt, der von der Oberfläche des Endbereiches des Gehäuses 1 gebildet ist oder auch von diesem absteht, überragt.

### Bezugszeichenliste

- 1.: Gehäuse
- 2.: Kabel
- 3.: Wellrohr
- 4.: Verzahnung
- 5.: Zahn
- 6.: Zahn
- 7.: Zahn

## Patentansprüche

1. Steckverbinderanordnung, aufweisend einen Steckverbinder mit einem Gehäuse (1), ein Kabel (2), ein das Kabel (2) umgebendes Wellrohr (3) sowie zumindest einen Kontaktpartner, wobei der zumindest eine Kontaktpartner an einem Ende eines elektrischen Leiters des Kabels (2) und innerhalb des Gehäuses (1) des Steckverbinders angeordnet ist, wobei weiterhin ein Ende des Wellrohres (3) mit dem Gehäuse (1) des Steckverbinders verbunden ist, **dadurch gekennzeichnet, dass** das Ende des Gehäuses (1) des Steckverbinders eine Verzahnung (4) aufweist, wobei die Verzahnung (4) im Innenbereich des Wellrohres (4) in zumindest eine von dem Wellrohr gebildete Nut eingreift.

2. Steckverbinderanordnung nach Anspruch 1, **dadurch gekennzeichnet, dass** die Verzahnung (4) mehrere in Längsrichtung des Kabels (2) betrachtet hintereinander angeordnete um den Endbereich des Gehäuses (1) zumindest teilweise umlaufende Zähne (5, 6, 7) aufweist.

3. Steckverbinderanordnung nach Anspruch 2, **dadurch gekennzeichnet, dass** die Höhe der zumindest teilweise umlaufenden Zähne (5, 6, 7) gleich ist.

4. Steckverbinderanordnung nach Anspruch 2, **dadurch gekennzeichnet, dass** die Höhe der zumindest umlaufenden Zähne (5, 6, 7) unterschiedlich ist.

5. Steckverbinderanordnung nach Anspruch 2, **dadurch gekennzeichnet, dass** die Höhe der zumindest teilweise umlaufenden Zähne (5, 6, 7) in Längsrichtung des Kabels (2) betrachtet zunimmt.
